# EUROPEAN PATENT APPLICATION

(11) **EP 1 549 069 A1**
(43) Date of publication of application: **29.06.2005**
(21) Application number: 03029017.5
(22) Date of filing: 16.12.2003
(51) Int. Cl.: H04N 7/16

(54) **Background reception for DVB-H receivers**

(71) Applicant: MATSUSHITA ELECTRIC INDUSTRIAL CO., LTD., Kadoma-shi, Osaka 571-8501 (JP)
(72) Inventor: Scheid, Albrecht, 63225 Langen (DE)
(74) Representative: Grünecker, Kinkeldey, Stockmair & Schwanhäusser Anwaltssozietät

(57) **Abstract**

The present invention relates to a hand-held battery powered DVB-H receiver. DVB-H service data is transmitted in bursts on a transmission channel. The bursts are transmitted in intervals having off-times of several seconds in between. These off-times are employed for background reception. During background reception, information from other services is obtained and memorized in the receiver's memory. Upon a user's switch to another service, the information stored with respect to this service is immediately displayed in order to bridge the time until a first burst of the new service is received. The obtained information may include text or still pictures. This background reception scheme only employs a single tuner/demodulator within the receiver for scanning other services and, preferably, updating the obtained information. The individual services switched during background reception and a possible update of the obtained information is performed depending on the current battery status, the receiver implementation and/or the user's preferences.

## Description

The present invention relates to a method for transmitting and a method for receiving data on/from a transmission channel and to a corresponding transmitter and receiver. Particularly, the present invention relates to a transmission of different kinds of data on a single transmission channel in accordance with a predetermined transmission scheme.

Transmission systems for broadcasting digital video data have been standardised for different transmission paths. For each of these transmission paths, an individual standard has been established. The standardised terrestrial broadcasting transmission system DVB-T is intended for broadcasting system targeting receivers at homes, offices, cars, etc. The DVB-T system is also suited for reception by mobile receivers, even at high driving speeds. However, mobile hand-held devices impose further limitations due to a limited battery capacity and due to extremely challenging heat dissipation in a miniaturized environment. Other standards DVB-S and DVB-C relate to satellite based broadcast systems and cable transmissions.

A new DVB transmission standard DVB-H which is currently under development is intended for small, pocketable terminals which are battery operated. These terminals could be small hand-held devices such as mobile phones.

The forthcoming DVB-H standard is based on the existing terrestrial broadcasting transmission system DVB-T. While the DVB-T transmission usually provides a bandwidth of 3 Mbps or more per service, services used in mobile hand-held terminals require a relatively low bandwidth due to small screens of the receivers. The estimated maximum bit rate for streaming video employing advanced video compression technique like MPEG-4 is around a few hundred kilo bits per second. In view of the reduced average amount of data to be transmitted, the DVB-H transmission standard proposes a time division multiplexing (TDM ) transmission scheme for each DVB-H service. The DVB-H data are transmitted in time slices or bursts. Each burst uses a bit rate higher than a bit rate required for transmission of data by a static bandwidth.

The DVB-H data of each DVB-H service are transmitted in form of bursts, each burst grouping a plurality of time slots. Between the burst data of a particular service, no data of that same service is transmitted. The intervals or off-times between the bursts allow other services to use the remaining bandwidth. A receiver is thus enabled to stay active for small proportions of time, i.e. only when receiving bursts. The capability of such a burst based transmission concept to enable reduced power consumption at the receiving side is increased with large off-periods. The burst-based concept aims to achieve power saving of around 90%. This is based on off-time of around 5 seconds and on-times of less than 0.5 seconds.

The duration of the off-times in the order of 5 seconds results in correspondingly prolonged switching times between services. When switching to another service in the same or in another transmission channel, an image will only be reproduced after having received a first burst. A user intending to switch to another service, has to wait for a first new burst transmitted for the newly selected service. In view of off-times continuing for around 5 seconds, a switching operation lasts for a time period in this order. A fast scan through different services will thus not be possible.

A DVB-H service is transmitted in adjacent cells of different transmission frequencies and respective channels. Generally, at a particular location, a plurality of different transmission channels is available for reception. When a mobile DVB-H receiver is moving from a current cell into an adjacent cell, the reception frequency is changed accordingly. The switching takes place at the overlapping area between both cells. The handover procedure is performed unnoticed by the user of a DVB-H service.

In view of these transmission schemes it is the object of the present invention to enable a background reception, in particular for providing a more convenient switching behaviour between different services.

This is achieved by the features of the independent claims.

Preferred embodiments are the subject matter of the independent claims.

According to a first aspect, a method for receiving first data from a transmission channel is provided. The transmission channel transmits the first data in form of bursts. The bursts are transmitted in predetermined intervals over the transmission channel. Further, second data are transmitted in form of bursts on the same transmission channel in-between the bursts of the first data and/or on another transmission channel. The method extracts the first data from the bursts transmitted on the transmission channel. During an interval when bursts of the first data are not transmitted, the method switches to second data transmitted on the same or another transmission channel. Information is extracted from the second data and stored.

According to another aspect of the present invention, a receiver for receiving first data from a transmission channel is provided. The transmission channel transmits the first data in form of bursts. The bursts are transmitted in predetermined intervals over the transmission channel. Further, second data are transmitted in form of bursts on the same transmission channel in-between the bursts of the first data and/or on another transmission channel. The receiver comprises first extracting means for extracting the first data from the burst transmitted on the transmission channel. Switching means of said receiver switch to second data transmitted on the same or another transmission channel during an interval when the bursts of the first data are not transmitted. Second extracting means extract information from the second data which are stored in a memory means.

It is the particular approach of the present invention to obtain and store information of other services unnoticed by the viewer. For this purpose, the off-times between bursts of transmitted time slots are employed. In this manner, information from other services can be obtained which can advantageously be used when the user actually switches to that service. For instance, for bridging the off-times, the previously obtained information can be displayed and provided to the user with an indication of the upcoming video signal. The user does not need to wait until the switching operation to the desired service is completed and the desired service is displayed. The user can immediately decide whether or not he wishes to wait until the switching operation for the currently selected service is completed or to switch to another service.

Preferably, the extracted information is auxiliary information accompanying video data from other DVB-H services which are transmitted on the same or another transmission channel. The auxiliary information is preferably text-style information representing service information such as event information or an "Electronic Service Guide", which relate to the content of the video data, for instance title, genre or program description. Upon switching to another service, the user can immediately be informed of the respective video information to be displayed without having received a first burst of time slots of the desired service. The reception of a first burst of DVB-H data may last for 5 seconds upon changing the selected DVB-H service.

According to another preferred embodiment, the information extracted from other services is video data including a video still image. Such video information stored for a respective other service enables an immediate display of a still image reflecting the video content of the selected service.

According to a preferred embodiment, the information is extracted from other services provided on the currently selected or other transmission channels, most preferably from all of the other currently available services. The extracted information is stored in the receiver for immediately providing service data upon switching to another service. Thus, the user is immediately informed of any upcoming video content upon switching to another of the available services.

Preferably, information is extracted for those other services which are indicated in a user selected "service list". The reception only switches to those services indicated in the user selected service list. Thus, the power consumed by battery operated devices background reception can be reduced.

According to a further preferred embodiment, the user selected service list is generated based on the user behaviour. For this purpose, the services selected by the user and, preferably, the individual receiving duration, are monitored and evaluated in order to create the user selected service list. Thus, the number of other services for which information is retrieved, can be limited to a predefined number of other services without affecting the user convenience. The user will always be able to immediately obtain information when switching to one of the user's previously preferred services. In this manner, the number of other services to be monitored for extracting information can be reduced to a minimum without affecting user convenience.

Preferably, this information is extracted from the multi-protocol-encapsulated DVB-H specific tables. This information can also be extracted from the MPEG-defined PSI tables or the DVB-defined SI tables. All these tables can be found in the current transmission channel and in the plurality of other transmission channels.

In order to accurately reflect the current new content, the stored information of other services is updated in periodic manner.

Preferably, the first and second video data being different video applications. While a first application being a video application of a mobile battery powered receiver transmitted in accordance with the international DVB-H standard, the second video application being transmitted in accordance with the DVB-T standard.

Preferably, the first video data of a first video application being a mobile battery powered receiver, preferably in accordance with the international DVB-H standard. The second video application being preferably in accordance with international DVB-T standard.

Preferably, the transmission channels are part of a multi-frequency network.

Other embodiments and advantages of the present invention will become more apparent from the following description of preferred embodiments, in which:
- Fig. 1: schematically illustrates a typical cell structure of a multi-frequency network,
- Fig. 2: schematically illustrates the transmission of DVB-H data in bursts of time slots,
- Fig. 3: illustrates an example of DBV-H service data transmitted within a plurality of transmission channels, and
- Fig. 4: being a flow chart schematically illustrating the receiving procedure.

The present invention relates to a modified transmission of DVB-H services enabling background reception for currently proposed DVB-H transmission services.

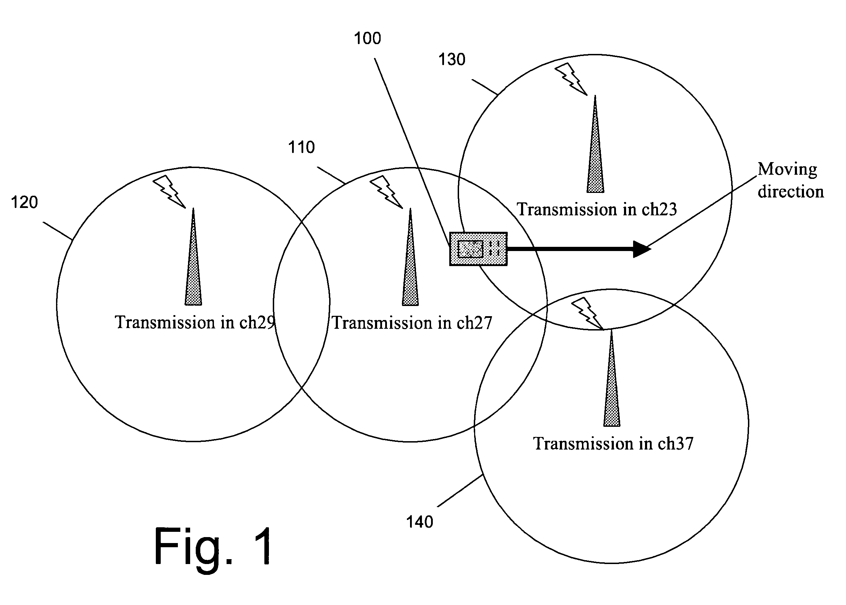

DVB-H services are transmitted in the same transmission channels used for transmitting DVB-T services. Different transmission channels are arranged in form of a multi-frequency network (MFN). In a multi-frequency network, identical DVB-H data is transmitted in adjacent cells at different frequencies. The configuration of such a multi-frequency network is schematically illustrated in Fig. 1.

The cell structure of Fig. 1 shows 4 cells of a multi-frequency network. Each cell transmits an identical multiplexed DVB-T and DVB-H transport stream in different channels 100-140. A mobile DVB-H receiver 100 including a single tuner/demodulator is currently receiving DVB-H signals in cell 110 on transmission channel 27. As indicated in Fig. 1, the mobile DVB-H receiver 100 is moving from cell 110 currently used for receiving the DVB-H service into adjacent cell 130. In order to maintain reception of the same DVB-H service, the mobile receiver 100 has to change the reception frequency upon entering the transmission area of the new cell, i.e. perform a handover operation.

The handover operation is performed within the overlapping area between the respective adjacent cells 110, 130. The reception frequency is generally switched based on the detected reception field strengths of the current cell and the new cell. While the field strength of the current cell is expected to decrease, the detected reception field strength of the reception frequency of the new cells is increasing upon being further approached by the DVB-H receiver 100. The handover procedure is performed such that the switching of the reception frequency is performed unnoticed to the user of the DVB-H service.

A mobile DVB-H receiver only having a single tuner/demodulator incorporated therein, further performs background reception to enable unnoticed access to information of other DVB-H services in order to increase user convenience. As will be described later, the additionally obtained information can shorten the waiting period of a user when switching to a different DVB-H service.

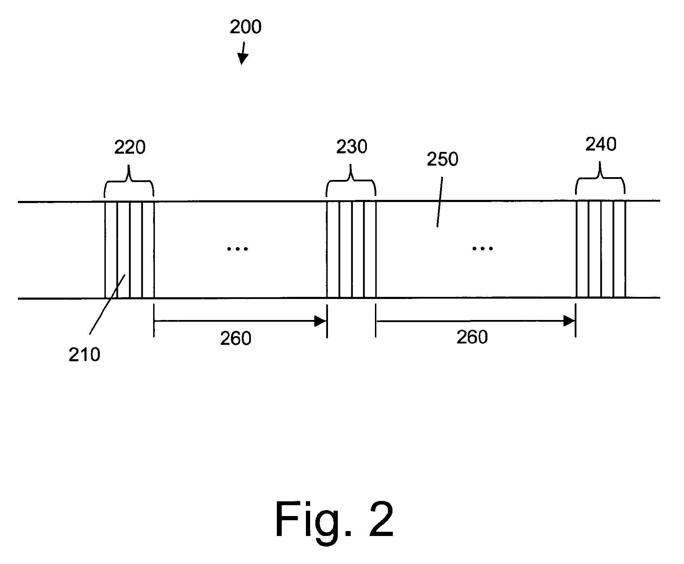

DVB-H data are transmitted multiplexed on a single DVB-T transmission channel, as illustrated, for instance, in Fig. 2. As shown in Fig. 2, DVB-H data are transmitted in time slices or bursts 220, 230, 240 in a time division multiplexing scheme on a transmission channel 200. Each burst 220, 230, 240 typically comprises around 2 Mbits (256 Kbytes) of data. The burst duration needed for transmitting the burst of data is around 140 ms if the preferred 16-QAM constellation is used for modulation. Each burst contains video or audio and/or other data to bridge approximately 5 seconds, namely the off-time 260 during which no burst data is transmitted. Depending on the internal bandwidth and amount of data transmitted within a burst 220-240, a burst duration, i.e. the time from the beginning to the end of a burst, may vary considerably. The burst duration is preferably calculated by dividing the burst size (in units of bits) by the burst bandwidth (in units of bits per second). A correction factor may be taken into account in order to compensate for an overhead caused by the transport packets of the DVB-T services.

Different DVB-H data streams can be transmitted in a time division multiplexing manner on a single transmission channel. The burst parameters like burst size, burst duration, burst bandwidth and off-time may frequently vary between the different data streams.

Synchronization between a transmitter and DVB-H receiver is achieved by newly starting the receivers clock every time a new burst is received. The receivers clock accuracy has thus to bridge a single off-time only.

Background reception enables access to different kinds of information, in particular DVB-H service information like event information, status information, etc., provided by other services is obtained in the background. The service information obtained from other DVB-H services has not yet been defined but can be assumed to be similar to service information tables currently used in DVB-T.

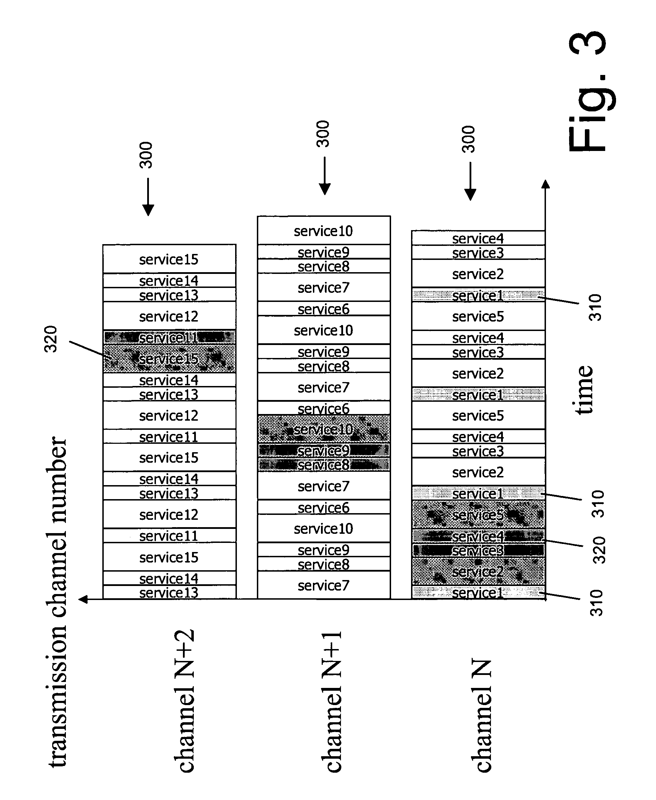

An example of different DVB-H services transmitted on a plurality of channels is illustrated Fig. 3. Each of the illustrated channels N, N+1, N+2 transmits bursts for each particular service in predetermined intervals.

As shown in Fig. 3 channel N transmits in predetermined intervals bursts 310 for service 1. Between these bursts 310, burst 320 of other services are transmitted, namely service 2, service 3, service 4, and service 5. This transmission scheme is continued in a repetitive manner. Correspondingly, services 6 to 10 are transmitted on channel N+1 and services 11 to15 are transmitted on channel N+2.

According to the example shown in Fig.3, service 1 represents the currently selected DVB-H service. The respective service data is extracted from burst 310 transmitted in predetermined intervals on channel N.

In-between burst 310, the DVB-H receiving unit may shut down operation in order to cut down battery power consumption. Alternatively, background reception is performed in order to access other services in between and to provide extracted information of a plurality of other DVB-H services. For this purpose, the receiver accesses one or a plurality of other services during the off-times.

As illustrated in Fig. 3, the first off-time is used to access other services transmitted on the same transmission channel N, namely service 2, service 3, service 4, and service 5. During the second off-time, the DVB-H receiver extracts information from services 8, 9 and 10 transmitted on channel N+1. During the following off-time, information is extracted from channel N+2 relating to services 11 and 15.

As services transmitted in different channels N, N+1, N+2, are not synchronized to each other, those services which overlap with service 1 in transmission channels N+1 and N+2 can also be accessed at a later point of time. In this manner, the complete UHF band can be evaluated and information of all services is collected and stored within the receiver. As soon as a user switches to another service, the pre-stored and decoded information is extracted from the receiver's memory and displayed to the user.

Based on the access to other services, the information which might serve for indicating the kind of service and the current content provided thereon is extracted. The extracted information is memorized in the receiver.

The memorised information is employed to bridge the long switching periods required in accordance with this transmission concept. Based on the present invention, the viewer can immediately recognise whether or not a newly selected service meets the user's approval or whether the user prefers to further switch to another service. This switching can be performed without waiting for a first burst of the newly selected service. When switching to a service provided on another transmission channel, the waiting time further includes a completed switching synchronization procedure to the other transmission channel. The user convenience can thus be considerably improved by employing the present invention.

In order to keep the service information stored in the receiver's internal memory always up-to-date, the receiver may frequently obtain and update the memorised service information. Such updating operations may be performed in a repetitive manner for scanning all currently available DVB-H services. Such update operations may be performed depending on the available battery resources, user preferences, etc.

Another alternative operation to be performed during background reception is the capturing of snap shots from other DVB-H services. Preferably, snap shots are obtained from all currently available DVB-H services which contain video data or, alternatively, only for a preferred sub-selection of all available services. Snap shots are particular single video images of the currently transmitted DVB-H video service. Upon switching to another DVB-H video service of the same or another transmission channel, the respective snap shot data is immediately displayed to the viewer in order to bridge the required switching time.

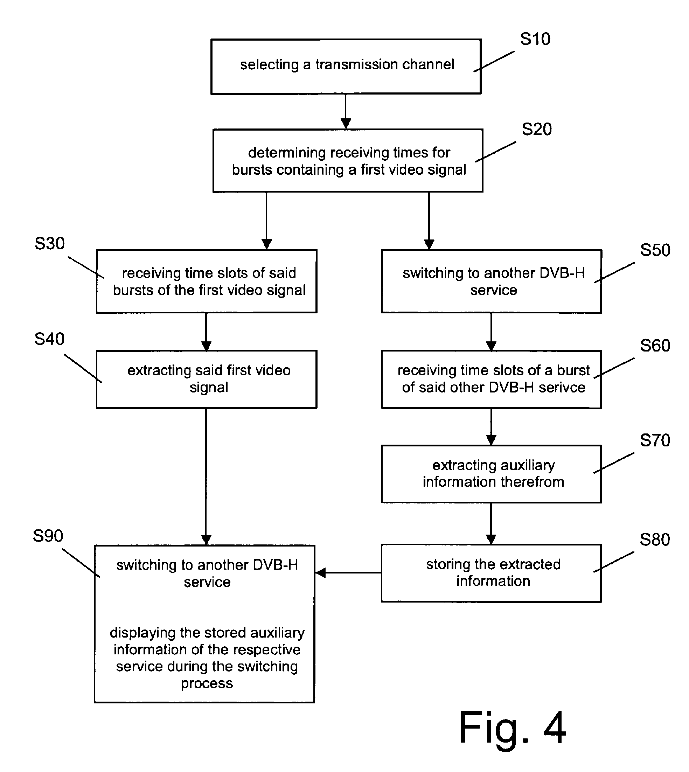

Referring to Fig. 4, a method for receiving DVB-H service data is described for application in connection with the transmission scheme of Fig. 2. When selecting a particular DVB-H service (step S10), receiving times for bursts of DVB-H video data are determined (step S20). In accordance with the determined transmission scheme, bursts containing DVB-H data are received and extracted therefrom (step S30, step S40). During the off-times between the bursts 220, 230, 240, the receiver switches to other services in the same or in another transmission channel (step S50) in order to access data transmitted thereon (step S60).

The receiver extracts information from the other DVB-H service, preferably auxiliary information like service information or snap shot data, in order to capture the currently provided DVB-H service thereon (step S70). The obtained information from other DVB-H services is stored in the receiver's internal memory (step S80). This memory may either be provided internally or being a detachable memory.

Upon switching to another service different from that selected in step S10, the resulting waiting time is bridged by immediately displaying information obtained for the newly selected DVB-H service from the memory (step S90). The data from the receiver's internal memory is displayed until currently transmitted DVB-H service data are received from a first burst of the new service.

As described in connection with Fig. 3, a plurality of different DVB-H services is transmitted on the channel of a currently received service and on other transmission channels. While all available other services are preferably accessed in order to obtain information on the delivered data, the number of other accessed services may be limited. Such a limitation may be due to restricted battery capacity of the battery operated receiver. For this purpose, only a selected number of other services is accessed during background reception and stored in the receiver's memory.

If the number of other services to be monitored by a receiver is limited, the receiver stores a list of predetermined services to be accessed. This "service list" indicates those services preferred by the user. The service list is either edited by the user himself or, preferably, generated automatically.

Based on this list, the receiver performs background reception by switching during off-times to other services in accordance with the "service list". Other services can be accessed in accordance with availability considerations, for instance, services provided on the same transmission channel N are accessed first before switching to services transmitted on other channels. An update of the extracted information is performed in a corresponding manner. Alternatively, the "service list" indicates priorities of the individual services with respect to each other. Based on such priorities, most preferred services are scanned first before extracting information from services of a lower priority.

The number of services to be included into the "service list" and their priorities may both be generated automatically and permanently stored within the receiver's memory. For this purpose, the currently selected service and the duration of the selected service is monitored and evaluated. Based on the obtained characteristics of preferred services, the receiver generates the service list adapted to the user's preferences.

In order to accomplish an automatic generation of a service list, the receiver counts the number of times a particular service is selected and the duration of the selection of a particular service. Based on the detected service selection history, the most preferred and least preferred services are determined.

When determining which services are preferred over others, the receiver may only take a particular monitoring period into account or to give past results a lower weight.

Based on user defined keywords, the information obtained during background reception can be evaluated and upon detection of a correspondence between the key words and the stored information, a predefined action is initiated. When detecting a correspondence, the receiver may insert an indication into a currently displayed picture or alternatively into a dedicated area of the screen outside the picture area. Such an indication may be the keyword itself, the obtained text information, the ID of the other service, etc. Text information may be easily extracted from commonly transmitted HTML files, Java text files, teletext and similar text sources.

After notifying the user of a detected correspondence, the receiver switches to the other service of the detected correspondence upon receiving the user's confirmation, for instance, by pressing a predefined button. Alternatively, upon detection of a correspondence, the receiver can immediately interrupt the currently displayed DVB-H service and automatically switch to the service for which the correspondence has been detected - without waiting for the user's confirmation.

Thus, the background reception may be used for providing up-to-date information to the user irrespective of the currently selected DVB-H service. For instance, new scores in a sports match, latest news relating to a particular topic or a new price at a stock exchange can immediately be notified to the user.

Further, the broadcast of a desired content on another service may be detected in advance and notified to the user. For this purpose, the currently displayed DVB-H service may be overlaid by a text such as "next event: news of the world starting on channel 3 in 2 minutes".

In summary, the present invention relates to a hand-held battery powered DVB-H receiver. DVB-H service data is transmitted in bursts on a transmission channel. The bursts are transmitted in intervals having off-times of several seconds in between. These off-times are employed for background reception. During background reception, information from other services is obtained and memorized in the receiver's memory. Upon a user's switch to another service, the information stored with respect to this service is immediately displayed in order to bridge the time until a first burst of the new service is received. The obtained information may include text or still pictures. This background reception scheme only employs a single tuner/demodulator within the receiver for scanning other services and, preferably, updating the obtained information. The individual services switched during background reception and a possible update of the obtained information is performed depending on the current battery status, the receiver implementation and/or the user's preferences.

## Claims

1. A method for receiving first data from a transmission channel (110), said transmission channel (110) transmitting said first data in form of bursts (220-240) wherein said bursts (220-240) are transmitted in intervals (260) on said transmission channel (110), and second data are transmitted on said same transmission channel (110) in-between said bursts (220-240) and/or on another transmission channel in form of bursts, **characterized by** the steps of:
extracting (S40) said first data from a burst (220-240) transmitted on said transmission channel (110),
switching (S50) the reception from said first data to second data transmitted in bursts on the same or on another transmission channel (110) during intervals when said bursts of said first data are not transmitted,
extracting (S70) information from said second data, and
storing (S80) said extracted information.

2. A method according to claim 1, wherein said first and said second data containing video data.

3. A method according to claim 2, wherein said step of extracting (S70) information from said second data (120-140) extracting auxiliary information accompanying said video data.

4. A method according to claim 3, wherein said auxiliary information being service information of said video data.

5. A method according to claim 4, wherein said service information being event information, in particular information relating to the content of said video data like title information or program information.

6. A method according to any of claims 1 to 5, wherein said information extracted from said second data being text data.

7. A method according to any of claims 1 to 5, wherein said information extracted from said second data being video data of one image.

8. A method according to any of claims 1 to 7, wherein the method further comprises the step of extracting information from a plurality of second data transmitted in form of bursts on the same and/or other transmission channels (S40).

9. A method according to any of claims 1 to 8, wherein information extracted from all other currently available second data being stored (S80).

10. A method according to any of claims 1 to 8, wherein information extracted from second data according to a data selection list being stored (S80) in a memory.

11. A method according to claim 10, wherein information being extracted from second data in accordance with the sequence of data indicated in said data selection list

12. A method according to claim 11, wherein the data and said sequence of said data indicated in said data selection list being adjustable by a user.

13. A method according to claim 11 or 12, further comprising the step of automatically determining the indication of data and/or said sequence of said data indicated in said data selection list based on user reception characteristics of data received as first data.

14. A method according to claim 13, further comprising the step of detecting a number and duration of each received first data and determining said characteristics for generating said data selection list based thereon.

15. A method according to any of claims 1 to 14, wherein said stored information extracted from other data being updated periodically.

16. A method according to any of claims 1 to 15, wherein said stored information being displayed (S90) upon a user initiated switch to the respective other data.

17. A method according to any of claims 1 to 16, wherein said stored information being displayed (S90) during the switching and synchronization procedure to the user-selected second data transmitted on another transmission channel (120-140).

18. A method according to any of claims 1 to 17, further comprising the steps of:
storing a user selected key word,
comparing said key word with information obtained from said second data, and
notifying the user if a correspondence is detected.

19. A method according to any of claims 1 to 18, wherein the bursts of said first data are transmitted in predetermined intervals on said transmission channel (110).

20. A method according to any of claims 1 to 19, wherein said first data being video data for a first video application and said second data being video data for a second video application.

21. A method according to claim 20, wherein said first video application being a mobile battery powered receiver.

22. A method according to claim 20 or 21, wherein said first video application being in accordance with the international DVB-H standard.

23. A method according to any of claims 1 to 22, wherein said data transmitted in form of bursts on a transmission channel are transmitted in multiplexed form with data being in accordance with the international DVB-T standard.

24. A method according to any of claims 1 to 23, wherein said first and second data being broadcast in a multi-frequency network.

25. A receiver for receiving first data from a transmission channel (110), said transmission channel (110) transmitting said first data in form of bursts (220-240) wherein said bursts (220-240) are transmitted in intervals (260) on said transmission channel (110), and second data are transmitted on said same transmission channel (110) in-between said bursts (220-240) and/or on another transmission channel in form of bursts
**characterized by**
first extracting means for extracting (S40) said first data from a burst (220-240) transmitted on said transmission channel (110),
switching means for switching the reception from said first data to second data transmitted in bursts on the same or on another transmission channel (110) during intervals when said bursts of said first data are not transmitted,
second extracting means for extracting (S70) information from said second data, and
memory means for storing (S80) said extracted information.

26. A receiver according to claim 25, wherein said first and said second data containing video data.

27. A receiver according to claim 26, wherein said second extracting means extracting auxiliary information accompanying said video data from said second data.

28. A receiver according to claim 27, wherein said auxiliary information being service information of said video data.

29. A receiver according to claim 28, wherein said service information being event information, in particular information relating to the content of said video data like title information or program information.

30. A receiver according to any of claims 25 to 29, wherein said second extraction means extracting text data from said second data.

31. A receiver according to any of claims 25 to 29, wherein said second extraction means extracting video data of one image from said second data.

32. A receiver according to any of claims 25 to 31, wherein second extraction means further extracting information from a plurality of second data transmitted in form of bursts on the same and/or other transmission channels.

33. A receiver according to any of claims 25 to 32 wherein said memory storing information extracted from all other currently available second data.

34. A receiver according to any of claims 25 to 32, wherein said memory storing information extracted by said second extraction means in accordance with second data indicated in a data selection list.

35. A receiver according to claim 334, wherein said second extraction means extracting information from second data in accordance with the sequence of data indicated in said data selection list

36. A receiver according to claim 35, wherein the data and said sequence of said data indicated in said data selection list being adjustable by a user.

37. A receiver according to claim 35 or 36, wherein said receiver automatically determining the indication of data and/or said sequence of said data indicated in said data selection list based on user reception characteristics of data received as first data.

38. A receiver according to claim 37, wherein said receiver detecting a number and duration of each received first data and determining said characteristics for generating said data selection list based thereon.

39. A receiver according to any of claims 25 to 38, wherein said second extraction means being adapted to update the information stored in said memory periodically.

40. A receiver according to any of claims 25 to 39, wherein said receiver displaying information from said memory upon a user initiated switch to the respective other data.

41. A receiver according to any of claims 25 to 40, wherein said receiver displaying information from said memory during a switching and synchronization procedure to the user-selected second data transmitted on another transmission channel (120-140).

42. A receiver according to any of claims 25 to 41, further comprising:
a memory for storing a user selected key word,
a comparator for comparing said key word stored in said memory with information obtained from said second data, and
notifying means for notifying the user if a correspondence is detected by said comparator.

43. A receiver according to any of claims 25 to 42, wherein the bursts of said first data are transmitted in predetermined intervals on said transmission channel (110).

44. A receiver according to any of claims 25 to 43, wherein said first data being video data for a first video application and said second data being video data for a second video application.

45. A receiver according to claim 39, wherein said receiver being a mobile battery powered receiver.

46. A receiver according to claim 39 or 40, wherein said first video application being in accordance with the international DVB-H standard.

47. A receiver according to any of claims 25 to 41, wherein said data transmitted in form of bursts on a transmission channel are transmitted in multiplexed form with data being in accordance with the international DVB-T standard.

48. A receiver according to any of claims 25 to 47, wherein said first and second data being broadcast in a multi-frequency network.
